(19) Europäisches Patentamt

European Patent Office

Office européen des brevets

(11) Veröffentlichungsnummer: **0 506 607 B1**

(12) **EUROPÄISCHE PATENTSCHRIFT**

(45) Veröffentlichungstag der Patentschrift: **02.08.95**

(51) Int. Cl.⁶: **F16B 7/04**, F16B 7/22

(21) Anmeldenummer: **92810123.7**

(22) Anmeldetag: **20.02.92**

(54) **Klemmvorrichtung zum lösbaren Verbinden zweier Profilstücke.**

(30) Priorität: **25.03.91 CH 903/91**
      **06.11.91 CH 3234/91**

(43) Veröffentlichungstag der Anmeldung:
      **30.09.92 Patentblatt 92/40**

(45) Bekanntmachung des Hinweises auf die
      Patenterteilung:
      **02.08.95 Patentblatt 95/31**

(84) Benannte Vertragsstaaten:
      **AT BE CH DE DK ES FR GB GR IT LI LU NL PT
      SE**

(56) Entgegenhaltungen:
      **EP-A- 0 123 683        EP-A- 0 166 794**
      **WO-A-90/10766          CH-A- 576 591**
      **CH-A- 632 064          DE-A- 2 623 814**
      **FR-A- 2 152 941        FR-A- 2 530 937**

(73) Patentinhaber: **SYMA INTERCONTINENTAL AG
      Rosenberg
      CH-9533 Kirchberg (CH)**

(72) Erfinder: **Züllig, Kurt
      Rosenbergstrasse 23
      CH-9533 Kirchberg (CH)**

(74) Vertreter: **Schick, Carl et al
      Isler & Pedrazzini AG
      Patentanwälte
      Postfach 6940
      CH-8023 Zürich (CH)**

Rank Xerox (UK) Business Services
(3. 10/3.0 9/3.3.3)

## Beschreibung

Die vorliegende Erfindung betrifft eine Klemmvorrichtung zum lösbaren Verbinden zweier Profilstücke gemäss dem Oberbegriff des Patentanspruchs 1.

Eine solche Klemmvorrichtung ist beispielsweise aus der CH-A-576 591 bekannt. Diese Vorrichtung dient zur Verbindung von aus Profilstücken zusammengesetzten Gestellen und/oder Wänden. Zu diesem Zweck ist ein längsverschiebbarer in einem Profilstück geführter Bolzen vorgesehen, der an seinem Kopfende T-förmig ausgebildet ist, um einen Schlitz eines anderen Profilstückes zu hintergreifen. Die Längsverschiebung des Bolzens wird dadurch erreicht, dass die konische Spitze der Schraube exzentrisch mit einer als Anzugsfläche dienenden konischen Ausnehmung im Bolzen zusammenwirkt.

In weiterer Ausgestaltung dieser Klemmvorrichtung ist aus der EP-PS-0 123 683 bekannt, den Ankerbolzen dadurch zu sichern, dass er durch eine Stange mit einem erweiterten Endteil verlängert ist und dass der Einsatzkern mit Spreizfingern versehen ist und nach innen ragende Nocken aufweist, um den erweiterten Endteil zu hintergreifen. Eine solche Schnappsicherung kann auch durch eine einstückig angeformte Hülse mit wenigstens einem Längsschlitz realisiert werden, in dem ein in der Stange diagonal angeordneter Stift geführt ist.

Ferner beschreibt die FR-PS 2.152.941 eine Vorrichtung mit Halteelementen, die um eine ortsfest im Gehäuse angeordnete Achse drehbar gelagert sind. Diese Vorrichtung hat keinen Bolzen und keine Schraube, die über Gleitflächen in den Bolzen eingreift, sondern die Halteelemente werden vielmehr direkt durch einen Exzenter geschwenkt. Das Gehäuse hat keine Gleitflächen, die bei einer axialen Bewegung der Halteelemente die Schwenkung derselben bewirken, sondern die Gleitflächen befinden sich im Exzenter und im unteren Bereich der Halteelemente.

Es ist nun Aufgabe der vorliegenden Erfindung, eine derartige Klemmvorrichtung zu schaffen, bei der die Arbeitsweise des Bolzens verbessert ist.

Diese Aufgabe wird erfindungsgemäss durch eine Klemmvorrichtung mit dem im kennzeichnenden Teil des Patentanspruchs 1 angegebenen Merkmalen gelöst.

Weitere vorteilhafte Ausgestaltungen der Erfindung sind in den abhängigen Ansprüchen angegeben.

Die Erfindung wird nachfolgend beispielsweise anhand einer Zeichnung näher erläutert. Es zeigen:

Fig. 1
eine auseinandergezogene Darstellung einer Klemmvorrichtung mit Einsatzkern und eines ersten Profilstücks,

Fig. 2
in schematischer Darstellung den Aufbau einer Ausführung der erfindungsgemässen Vorrichtung im Schnitt durch die Längsachse einer Fixierbüchse,

Fig. 3
eine schematische Darstellung dieser Vorrichtung im Schnitt quer zur Längsachse der Fixierbüchse,

Fig. 4
eine Draufsicht eines flachen oder blockförmigen Haltestücks einer solchen Vorrichtung,

Fig. 5
eine Seitenansicht einer anderen Ausführung eines Einsatzkerns nach der Erfindung,

Fig. 6
eine perspektivische Darstellung eines Ankerbolzens mit einer quer montierbaren Ankerstange,

Fig. 7
eine perspektivische Darstellung eines Federprofils für diese flachen Haltestücke,

Fig. 8 und 9
eine schematische Darstellung eines Haltestükkes in offener Position bzw. geschlossener Position,

Fig. 10 und 11
eine Frontansicht bzw. eine Seitenansicht einer Variante einer Klemmfeder zur Halterung solcher Haltestücke,

Fig. 12
eine Draufsicht dieser Klemmfeder,

Fig. 13
eine schematische Darstellung zur Erläuterung der Arbeitsweise einer solchen Klemmfeder, und

Fig. 14 und 15
eine schematische Darstellung zur Erläuterung der Arbeitsweise einer Sicherung im blockierten bzw. befreiten Zustand.

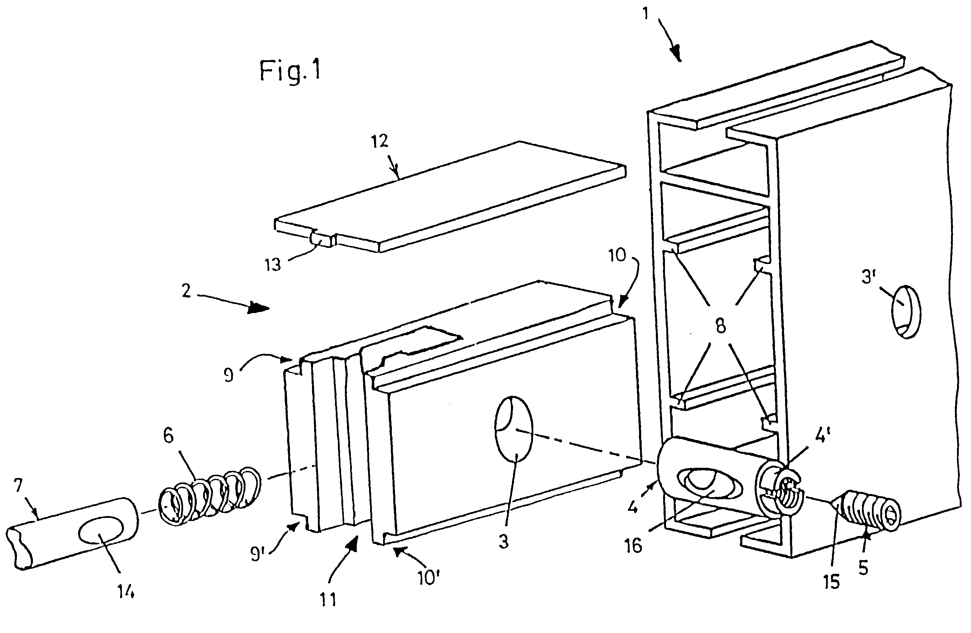

Von einem aus einer Mehrzahl von Profilstücken zusammengestellten Gestell ist in Fig. 1 ein erstes Profilstück 1 dargestellt, in welches ein Einsatzkern 2 aus einem Leichtmaterial, vorzugsweise Kunststoff, eingeschoben und arretiert werden kann. Der Einsatzkern 2 ist mit einer Querbohrung 3 zur Aufnahme einer Fixierbüchse 4 mit Gewindestift 5 und mit einer in Fig. 1 unsichtbaren Längsbohrung zur Aufnahme einer Schraubenfeder 6 und eines Ankerbolzens 7 versehen.

Das Profilstück 1 weist vorzugsweise einen rechteckigen Querschnitt auf mit in einen Hohlraum ragenden Schienen 8 zur Führung des Einsatzkernes 2. Zu diesem Zweck kann der Einsatzkern 2 mit Schultern 9, 9', 10, 10' versehen sein, die die Führung erleichtern. Der Einsatzkern 2 weist an seiner linken Stirnseite eine senkrecht zur Achse der Bohrung 3 verlaufende Oeffnung 11 auf, die gegebenenfalls durch je eine Seitenplatte abgedeckt werden kann. In Fig. 1 ist nur eine solche Seitenplatte 12 dargestellt, die an ihrer linken Stirnfläche eine mittige kurze Erweiterung 13 aufweist. Durch die Platte 12 und die Schultern 9 und 10 ergeben sich zwei Nuten, die ein korrektes Einführen des Einsatzkernes 2 über die Schienen 8 erleichtern. Entsprechendes gilt für eine untere in Fig. 1 nicht dargestellte Seitenplatte. Diese Seitenplatten sind vorzugsweise ebenfalls aus Kunststoff.

Der Ankerbolzen 7 ist in der Längsbohrung verschiebbar gelagert, wobei zwischen dessen einem Ende und dem Ende der Längsbohrung die Schraubenfeder oder Druckfeder 6 untergebracht ist. Im Ankerbolzen 7 ist eine angenähert konische Ausnehmung 14 vorhanden, in die das konische Ende oder die Spitze 15 der Schraube 5 hineinragt. Die Schraube 5 ist durch die Fixier- oder Gewindebüchse 4 geführt, die ihrerseits in die Bohrung 3 des Einsatzkernes 2 einführbar ist. Die Büchse 4 weist eine Querbohrung 16 zur Aufnahme des Ankerbolzens 7 auf. Die konische Spitze 15 der Schraube 5 wirkt mit der grösseren konischen Ausnehmung 14 zusammen nach dem Prinzip der geneigten Flächen und verschiebt den Ankerbolzen 14 nach rechts (Fig. 1), um die Klemmvorrichtung zu schliessen.

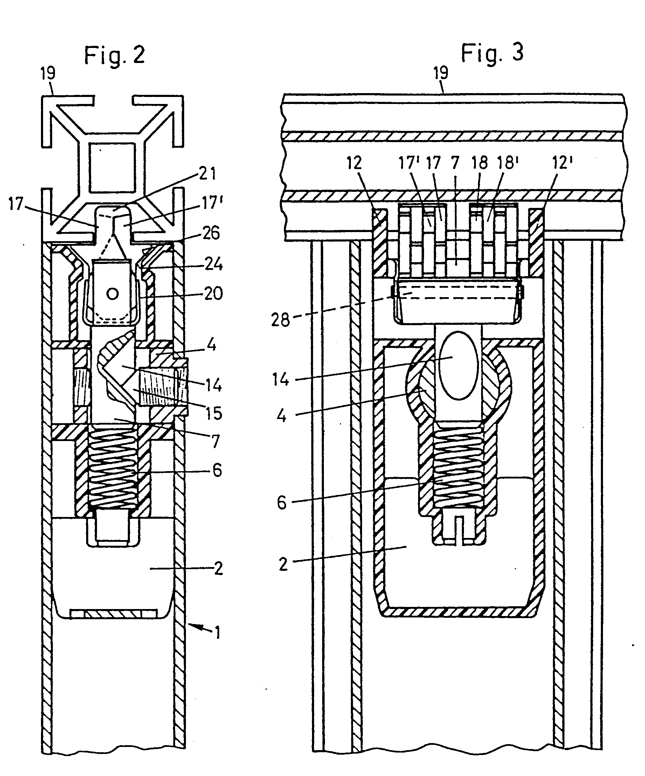

In den Figuren 2 und 3 ist die Längsbohrung des Einsatzkernes 2 sichtbar, wo die Feder 6 und der Ankerbolzen 7 untergebracht sind, der vorgesehen ist, um verschiedene Haltestücke 17, 17′, 18, 18′ zu haltern. Diese Haltestücke sind flach in zwei Gruppen alternierend umgekehrt aufeinandergestapelt.

Fig. 2 zeigt auch ein zweites Profilstück 19 mit mindestens einem Schlitz, in dem die Enden der Haltestücke 17, 17′ eingeführt sind. Solche Haltestücke 17, 17′, 18, 18′ können beispielsweise mit einer Profilfeder 20 in einer Ruheposition gehalten sein. In Fig. 3 sind beispielsweise zwei Gruppen von Haltestücken der Dicke e dargestellt, und zwar vier Haltestücke 17, 17′... links und 4 Haltestücke 18, 18′.... rechts, wobei die Haltestücke 17, 18′ in der einen Position und die Haltestücke 17′, 18 und der umgekehrten Position gelagert sind.

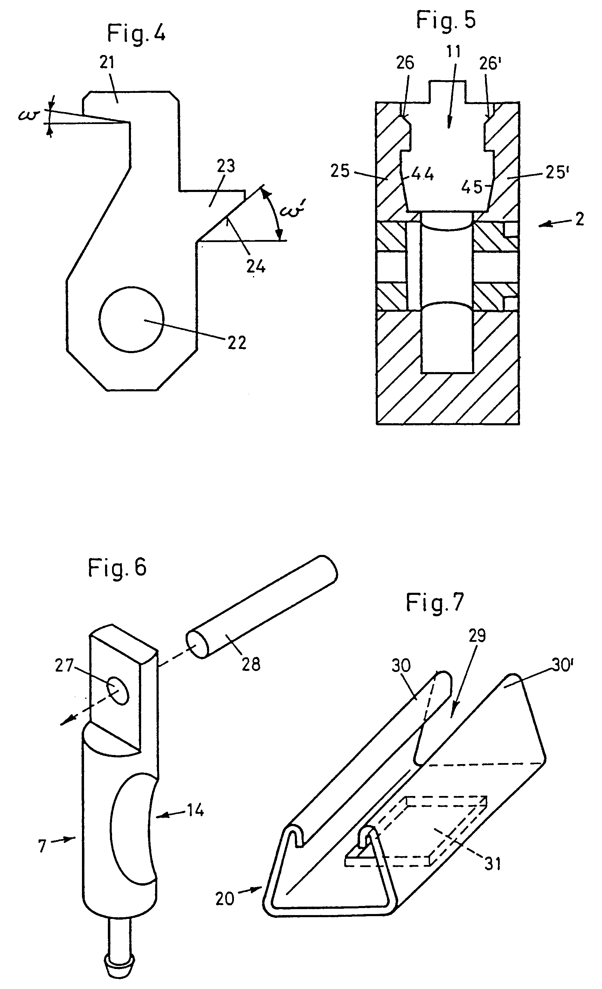

In Fig. 4 ist eine Ausführung eines Haltestücks dargestellt, das in seinem einen Endbereich eine Nase 21, in dem anderen Endbereich eine Bohrung 22 und in einem Mittelbereich eine Erweiterung 23 mit einer geneigten Fläche 24 aufweist.

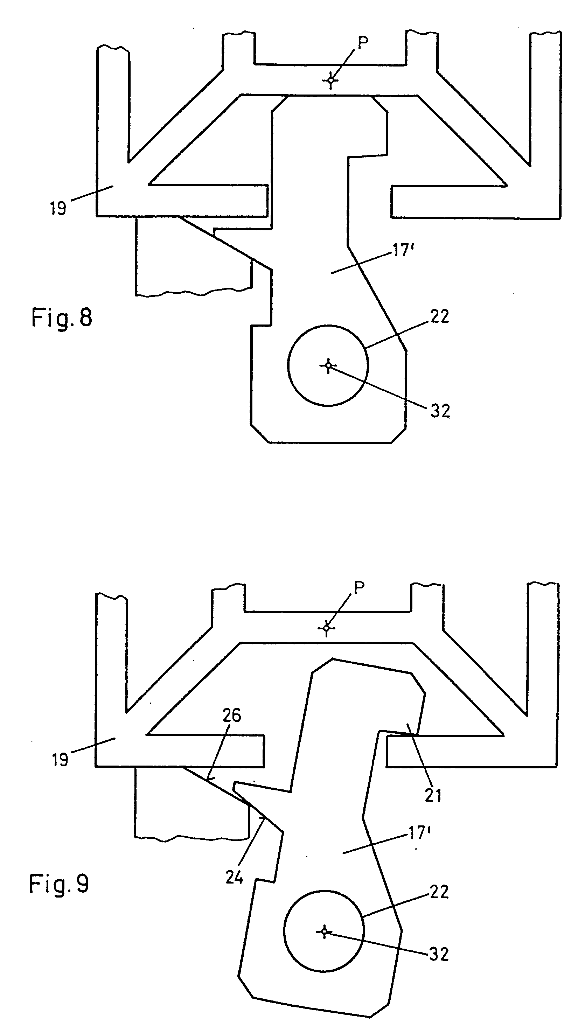

In Fig. 5 ist eine Variante des Einsatzkernes 2 dargestellt, bei dem die Wände 25, 25′, die die Oeffnung 11 seitlich abgrenzen, je eine Rampe 26, 26′ aufweisen, die vorgesehen sind, um mit den geneigten Flächen 24 der Haltestücke (Fig. 4) zusammenzuwirken, um den in den Figuren 8 und 9 bildlich dargestellten Effekt zu erreichen.

Fig. 6 zeigt den in Fig. 1 nur teilweise dargestellten Ankerbolzen 7, der einen zylindrischen Teil, in dem sich die konische Ausnehmung 14 befindet, und einen abgeflachten Teil aufweist, der mit einer Bohrung 27 versehen ist, in die eine Stange 28 eingeführt wird. Die Stange 28, die auch in Fig. 3 sichtbar ist, dient zur Lagerung der Haltestücke, die zu diesem Zweck mit den Bohrungen 22 (Fig. 4) versehen sind. Solche Haltestücke können beispielsweise aus Leichtmetall oder Stahl gestanzt sein. Die Stange 28 kann zentriert fixiert werden.

Die in Fig. 7 beispielsweise dargestellte Profilfeder 20 weist zumindest angenähert einen trapezförmigen Querschnitt auf. Die Längskanten 30, 30′ bei der Oeffnung 29 der Profilfeder 20 sind gebördelt, um die Haltestücke seitlich besser halten zu können. Der Boden der Profilfeder 20 weist eine Oeffnung 31 für den Ankerbolzen 7 auf. Die Federwirkung der Profilfeder 20 erlaubt, die Haltestücke 17, 17′,...18, 18′... derart zu haltern, dass ihre Enden eine Art Block bilden, dessen Breite etwas kleiner als die Breite des Schlitzes des zweiten Profilstücks 19 ist, in den sie gemeinsam eingeführt werden, und zwar unabhängig der Orientierung der einzelnen Haltestücke mit der Nase 21 (Fig. 4) alternierend nach links oder nach rechts.

Die erfindungsgemässe Vorrichtung funktioniert nun folgendermassen:

In der Ruheposition können die Haltestücke, beispielsweise das Haltestück 17′ in Fig. 8 senkrecht in den Schlitz des zweiten Profilstücks 19 eingeführt werden. Der Abstand zwischen der Achse 32 der Bohrung 22 des Haltestückes 17′ bzw. der Stange 28 des Ankerbolzens 7 (Fig. 6, 3, 1) und einem Referenzpunkt P des Profilstücks 19 sei in dieser offenen Position gleich Do. Aus Fig. 2 ist ersichtlich, dass in dieser offenen Position sich der tiefste Punkt der Ausnehmung 14 des Ankerbolzens 7 in einer bezüglich der Drehachse der Schraube 5 (Fig. 1) bzw. bezüglich der Symmetrieachse der Fixierbüchse 4 versetzten Lage befindet. Durch Drehen der Schraube 5 in die Ausnehmung 14 wird der Ankerbolzen 7 (Fig. 2) nach unten verschoben, so dass dann der Abstand Dv zwischen der Achse 32 (Fig. 9) und dem Punkt P grösser als Do wird. Die geneigte Fläche 24 des Haltestücks 17′ gleitet über die Rampe 26 des Einsatzkerns und bewirkt eine Drehung des Haltestücks 17′ um die Achse der Stange 28, bis die Nase 21 die Längsnut oder den Schlitz des Profilstücks 19 hintergreift. Da die verschiedenen Haltestücke alternierend und daher auch getrennt wirken, ergibt sich eine ausgezeichnete Verbindung der Profilstücke 1 (Fig. 1) und 19 (Fig. 9).

Der erfindungsgemässe Klemmeffekt kann wie erläutert auch mit einem einzigen Haltestück erreicht werden. In der Praxis sollten jedoch zwei oder mehrere Haltestücke pro Klemmvorrichtung verwendet werden. Sehr gute Resultate konnten unabhängig von der Reihenfolge mit je drei Haltestücken links und rechts im Ankerbolzen 7 erzielt werden. Die Rampen 26 können direkt im Endbereich (Fig. 2) der Wände bei der Oeffnung 11 oder etwas weiter im Innern (Fig. 5) des Einsatzkernes 2 vorhanden sein.

Anstelle der Rampen 26 können auch runde Gleitflächen oder eingebettete Stäbchen verwendet werden. Zudem ist noch zu bemerken, dass bei geeigneter Dimensionierung der Profilfeder 20, die an sich nicht unbedingt notwendig ist, die Feder 6 entfallen kann.

Im Beispiel gemäss Fig. 3 könnten die Haltestücke 17,17', ... 18, 18',... auch seitlich zwischen einer Ringfeder und einer Mutter eingeklemmt sein, damit sie sich wegen des Eigengewichts nicht drehen können. Damit könnte die Feder 20 entfallen.

Daraus ergeben sich selbstverständlich mehrere Varianten mit beispielsweise je n Haltestücken rechts und/oder links, wobei n auch gleich 1 sein kann; in diesem Fall würde es sich beispielsweise um ein blockförmiges Haltestück der Höhe $h = n \cdot e$ handeln.

Die Schraube 5 mit der konischen Spitze 15 und die Ausnehmung 14 des Ankerbolzens 7 bilden ein System von Anzugsoder gleitenden Flächen, das auch mit anderen Mitteln realisiert werden kann, und zwar beispielsweise durch eine diedrische Ausnehmung 14 im Ankerbolzen und eine zwischen der Büchse 4 und dem Ankerbolzen 7 angeordnete diedrische Klinke, derart, dass eine Schraube vorzugsweise ohne Spitze die diedrische Klinke gegen die diedrische Ausnehmung drücken kann.

Schliesslich ist in Fig. 1 das Profilstück 1 mit einer Bohrung 3' versehen, die mit einer Andrehung 4' an der Gewindebüchse 4 zusammenwirkt, um den Einsatzkern 2 im Profilstück 1 festzuhalten.

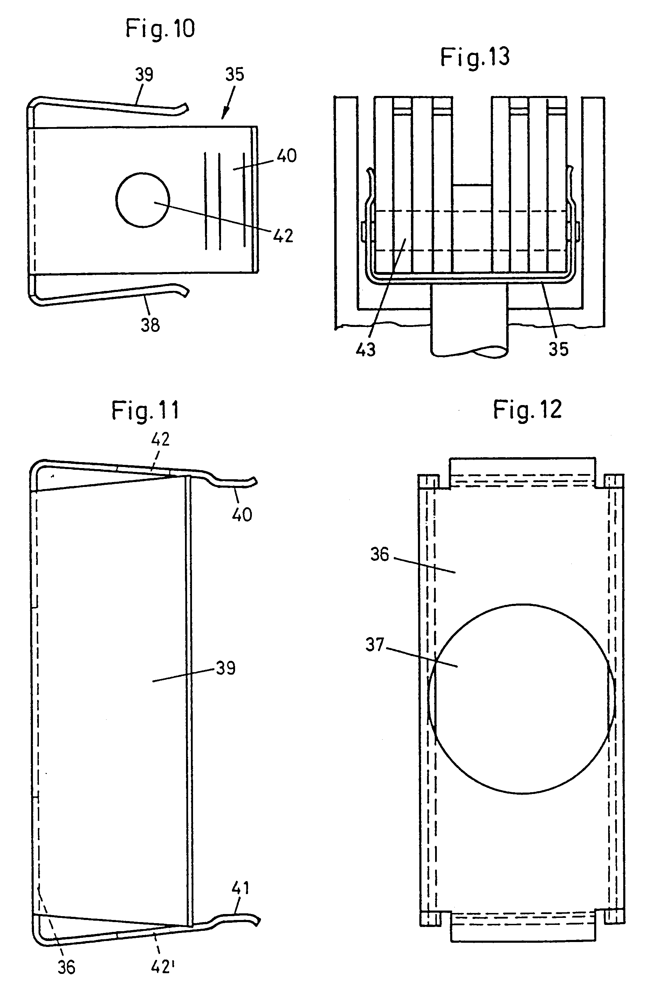

In weiterer Ausgestaltung der Erfindung kann die Profilfeder eine doppeltwirkende Klemmfeder sein. Eine solche Klemmfeder ist in den Figuren 10 bis 13 dargestellt. Diese Klemmfeder 35 besteht beispielsweise aus einem Boden 36 mit einer vorzugsweise runden Bohrung 37, zwei länglichen Seitenwänden 38, 39 und zwei schmalen Seitenwänden 40, 41, die mit je einer kleineren runden Bohrung 42, 42' versehen sein können. Eine solche Klemmfeder kann seitlich auf die schmalen Seiten aller Haltestücke und/oder auf die extreme Flachseiten des durch die Haltestücke gebildeten Blocks wirken. Dabei kann die Stange 43 an ihren Enden je eine Verjüngung aufweisen, um sie in der Klemmfeder zwischen den Bohrungen 42, 42' zu haltern. Die Feder 20 (Fig.7), die eine vereinfachte Variante der Feder 35 ohne schmale Seitenwände ist, könnte ebenfalls eine runde Bodenbohrung aufweisen, deren Durchmesser grösser als der Durchmesser des Ankerbolzens ist.

In weiterer Ausgestaltung der Erfindung kann der Einsatzkern einstückig, statt mit geklebten Platten 12, 12' versehen sein. Der Einsatzkern kann zudem auch ähnlich wie der aus der EP-PS 0123683 bekannte aufgebaut sein bezüglich der Führungsnuten und/oder der dort beschriebenen Schnapphalterung, wobei als Schnapphalterung auch eine an der entsprechenden Verlängerung des Ankerbolzens anschraubbare Mutter dienen kann.

Die Angriffsfläche der Nase 21 (Fig. 4) weist eine Abschrägung auf, vorzugsweise mit einem Winkel w von etwa 10 Grad. Für die Abschrägung der Fläche 24 (Fig. 4) gilt vorzugsweise etwa w' = 40 Grad.

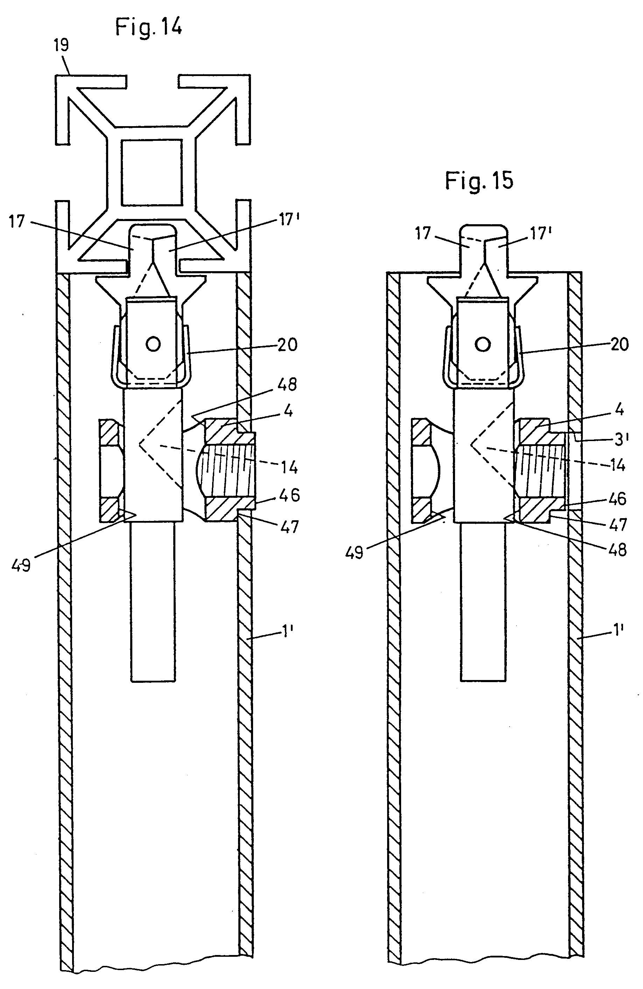

Die Figuren 14 und 15 zeigen die Arbeitsweise der Büchse 4 als die axiale Bewegung des Bolzens 7 blockierende Sicherung. Dieser Sicherungseffekt erfolgt von selbst, da beim Anziehen der Schraube 5 (Fig.1) der äussere Rand der Büchse 4 in die Öffnung 3' des Profilstücks 1 (Fig. 1 und 14) einrastet. Dies bedeutet, dass die Klemmvorrichtung von selbst blockiert wird, wenn sie klemmt, wie es in Fig. 14 (ohne Schraube 5), angedeutet ist. Hingegen ist die Klemmvorrichtung befreit (Fig. 15), wenn die Schraube 5 nicht drückt. In diesem Fall kann die Büchse 4 nach innen ins Profil 1 gedrückt werden, um das Gehäuse ohne Probleme herausziehen zu können. Zu diesem Zweck ist der Durchmesser der Bohrung 16 (Fig. 1) der Büchse 4 etwa einige Millimeter grösser als der Durchmesser des Bolzens 7 im Bereich der Ausnehmung 14, wobei die Bohrung 16 auch oval, vorzugsweise jedoch ein Parallel-Langloch mit abgerundeten Endrändern sein kann, um eine seitliche Verschiebung zwischen dem Bolzen 7 und der Büchse 4 zu ermöglichen.

Für diese Anwendung kann die Steigung des Gewindes der Schraube 5 bzw. der Büchse 4 (Fig. 1) grösser als 1 mm pro Umdrehung sein. Sehr gute Resultate konnten beispielsweise mit Werten von 3 und 4,5 mm pro Umdrehung erzielt werden. Vorzugsweise wird ein Trapezgewinde, beispielsweise vom Typ M10x3 verwendet.

Im Gegensatz zur Ausführung von Fig. 7 haben die Feder 20 in den Fig. 14 und 15 einen ganz leichten trapezförmigen Ausschnitt, der auch entfallen könnte, falls das Gehäuse 2 (Fig. 5) im unteren Bereich des Raumes, wo die Feder 20 eingesetzt wird, nach innen abgeschrägte Flächen 44, 45 aufweist, die eine Führung für den Boden der Feder 20 darstellen. Diese Ausführung kann wichtig sein, falls insbesondere die länglichen Seitenwände der Feder 20 senkrecht zum Boden 36 (Fig. 12) verlaufen.

Die Gewindebüchse 4 nach Fig. 14 und 15 weist eine äussere Stirnfläche 46, eine Schulterfläche 47, eine vordere Stützfläche 48 und eine hintere Stützfläche 49 auf. Beim Einrasten der Stirnfläche 46 in die Bohrung 3' kann sich die Schulterfläche 47 gegen den Rand der Wand bei der Bohrung 3' stützen. Der Abstand zwischen den Flächen 48 und 49 entspricht dem erweiterten Durchmesser der Querbohrung 16, die vorzugsweise ein Langloch ist. Der Abstand zwischen den Flächen 46 und 48 (Fig. 15) ist vorzugsweise nur wenig kleiner als der kleinste Abstand zwischen der Innenseite der Wand 1' und dem Bolzen 7 im Bereich der Ausnehmung 14, und der Abstand zwischen den Flächen 47 und 49 (Fig. 14) ist vorzugsweise nur wenig grösser als der grösste Abstand zwischen der Innenseite der Wand 1' im Bereich der Bohrung 3' und dem Bolzen 7 im Bereich hinter der Ausnehmung 14.

## Patentansprüche

1. Klemmvorrichtung zum lösbaren Verbinden zweier Profilstücke (1,19), wobei in einem ersten der Profilstücke (1) ein Einsatzkern (2) einfügbar und fixierbar ist, der einen axial beweglichen Bolzen (7) aufweist, der an einem Endteil eine Nase umfasst, die mindestens teilweise in eine Oeffnung eines zweiten Profilstücks (19) einfügbar ist, um einen Druck gegen eine Partie des zweiten Profilstücks auszuüben, die die Oeffnung teilweise abschliesst, wobei eine in einer Gewindebüchse (4) geführte Schraube (5) über ein System von Gleitflächen (14,15) in den Bolzen (7) eingreift, um diesen axial zu verschieben, dadurch gekennzeichnet, dass der Bolzen (7) Tragmittel (27,28) zur schwenkbaren Lagerung von mindestens einem Haltestück (17,17',18,18') aufweist, und dass dieses Haltestück und mindestens eine Innenwand des Einsatzkerns (2) ein zweites System von Gleitflächen (24,26) umfassen, die bei einer axialen Bewegung des Bolzens (7) eine Schwenkung des Haltestücks (17) bewirken, das an seinem freien Endbereich die besagte Nase (21) aufweist, die vorgesehen ist, um diesen Druck auszuüben.

2. Vorrichtung nach Anspruch 1, dadurch gekennzeichnet, dass diese Tragmittel (27,28) mehrere einzeln schwenkbar gelagerte Haltestücke (17,17',18,18') tragen.

3. Vorrichtung nach Anspruch 2, dadurch gekennzeichnet, dass diese Haltestücke flach und alternierend mit der Nase (21) in der einen oder der anderen Richtung gestapelt sind.

4. Vorrichtung nach Anspruch 2 oder 3, dadurch gekennzeichnet, dass diese Tragmittel (27,28) eine im Endbereich des Bolzens (7) quer angeordnete Stange (28) umfassen.

5. Vorrichtung nach einem der Ansprüche 1 bis 4, dadurch gekennzeichnet, dass die Angriffsfläche der Nase (21) der Haltestücke eine Abschrägung aufweist.

6. Vorrichtung nach einem der Ansprüche 1 bis 5, dadurch gekennzeichnet, dass das zweite System von Anzugsflächen mindestens eine Rampe (26,26') an der Innenseite einer Wand (25,25') des Einsatzkerns (2) und eine ihr zugeordnete geneigte Fläche (24) an einer Erweiterung (23) der Haltestücke umfasst.

7. Vorrichtung nach einem der Ansprüche 1 bis 6, dadurch gekennzeichnet, dass die Haltestücke teilweise im Innern einer Feder (20;35) eingeklemmt sind.

8. Vorrichtung nach einem der Ansprüche 1 bis 7, dadurch gekennzeichnet, dass der Einsatzkern (2) schräge Flächen (44,45) aufweist, um eine zumindest angenähert zentrierte Einführung der durch diese Tragmittel getragenen Haltestücke (17,17',18,18') zu erleichtern.

9. Vorrichtung nach einem der Ansprüche 1 bis 8, dadurch gekennzeichnet, dass das Gewinde der Schraube (5) bzw. der Gewindebüchse (4) eine Steigung von mehr als 1 mm pro Umdrehung aufweist.

10. Vorrichtung nach einem der Ansprüche 1 bis 9, dadurch gekennzeichnet, dass der Bolzen (7) durch eine seitlich erweiterte Querbohrung (16) der Gewindebüchse (4) geführt ist, und das eine Querbohrung (3) des Einsatzkerns (2) und die in dieser geführte Gewindebüchse (4) derart formschlüssig ausgebildet sind, dass eine seitliche Verschiebung der Gewindebüchse (4) längs der Querbohrung (3) des Einsatzkerns (2) möglich ist.

## Claims

1. Clamping device for releasably connecting two profiled parts (1, 19) wherein an insert core (2) intended to be inserted and fixed in a first of the profiled parts (1) has an axially movable bolt (7) having an end portion which comprises a projection intended to be introduced at least partially in an opening of a second profiled part (19) in order exert a force against a portion of said second profiled part partially covering said opening, wherein a screw (5) received in a threaded bush (4) engages the bolt (7) by means of a system of sliding surfaces (14, 15) in order to displace the bolt axially, **characterized in that** the bolt (7) has supporting means (27, 28) for pivotally supporting at least one holding piece (17, 17', 18, 18'), and that said holding piece and at least one of the interior walls of the insert core (2) have a second system of sliding surfaces (24, 26) which owing to an axial movement of the bolt (7) cause a deviation of the holding piece (17) having in its free end area said projection (21) intended to exert said force.

2. Device according to claim 1, **characterized in that** said supporting means (27, 28) support several individually pivotally hinged holding pieces (17, 17', 18, 18').

3. Device according to claim 2, **characterized in that** said holding pieces are stacked flat and alternating with the projection (21) in one or the other direction.

4. Device according to claim 2 or 3, **characterized in that** said supporting means (27, 28) comprise a rod (28) transversely arranged in the end region of the bolt (7).

5. Device according to one of the claims 1 to 4, **characterized in that** the working surface of the projection (21) of the holding pieces has a bevel.

6. Device according to one of the claims 1 to 5, **characterized in that** the second system of sliding surfaces comprises at least one slope (26, 26') on the inside of a wall (25, 25') of the insert core (2) and one inclined surface (24) associated with it in an extension (23) of the holding pieces.

7. Device according to one of the claims 1 to 6, **characterized in that** the holding pieces are partly clamped on the inside of a spring (20; 35).

8. Device according to one of the claims 1 to 7, **characterized in that** the insert core (2) has bevelled surfaces (44, 45) in order to facilitate at least approximately a centered introduction of the holding pieces (17, 17', 18, 18') beared by said supporting means.

9. Device according to one of the claims 1 to 8, **characterized in that** the thread of the screw (5) and of the threaded bush (4) respectively has a pitch of more than 1 mm per revolution.

10. Device according to one of the claims 1 to 9, **characterized in that** the bolt (7) is guided through a laterally expanded transverse hole (16) of the threaded bush (4) and wherein a transverse bore (3) of the insert core (2) and the threaded bush (4) guided in it are designed in such a form-locking way that a lateral displacement of the threaded bush (4) along the transverse bore (3) of the insert core (2) is possible.

**Revendications**

1. Dispositif de serrage destiné à la liaison détachable de deux profilés (1, 19), dans lequel un bloc d'insertion (2) peut être introduit et fixé dans un premier des profilés (1), bloc qui comprend un tourillon (7) mobile en direction axiale et comporte dans une partie d'extrémité un nez qui peut être introduit au moins en partie dans une ouverture d'un second profilé (19) pour exercer une pression contre une partie du second profilé qui ferme en partie l'ouverture, une vis (5) qui est guidée dans une douille filetée (4) pénétrant par un système de surfaces de glissement (14, 15) dans le tourillon (7) de manière à déplacer ce dernier axialement, caractérisé en ce que le tourillon (7) comprend des moyens de support (27, 28) pour supporter de façon pivotante au moins un élément de retenue (17, 17', 18, 18') et en ce que cet élément de retenue et au moins une paroi interne du bloc d'insertion (2) forment un second système de surfaces de glissement (24, 26), qui déterminent par un mouvement axial du tourillon (7) un pivotement de l'élément de retenue (17) qui comprend dans sa partie d'extrémité libre ledit nez (21) pour exercer cette pression.

2. Dispositif selon la revendication 1, caractérisé en ce que ces moyens de support (27, 28) supportent plusieurs éléments de retenue (17, 17', 18, 18') montés individuellement de façon pivotante.

3. Dispositif selon la revendication 2, caractérisé en ce que ces éléments de retenue sont empilés à plat et de façon alternée de manière que le nez (21) soit orienté dans l'une ou l'autre direction.

4. Dispositif selon la revendication 2 ou 3, caractérisé en ce que ces moyens de support (27, 28) comprennent une tige (28) disposée transversalement dans la zone d'extrémité du tourillon (7).

5. Dispositif selon l'une quelconque des revendications 1 à 4, caractérisé en ce que la surface d'attaque du nez (21) des éléments de retenue comprend un chanfrein.

6. Dispositif selon l'une quelconque des revendications 1 à 5, caractérisé en ce que le second système de surfaces de traction comprend au moins une rampe (26, 26') sur le côté interne d'une paroi (25, 25') du bloc d'insertion (2) et une surface inclinée (24) qui lui est associée dans une partie en saillie (23) des éléments de retenue.

7. Dispositif selon l'une quelconque des revendications 1 à 6, caractérisé en ce que les éléments de retenue sont serrés partiellement à l'intérieur d'un ressort (20; 35).

8. Dispositif selon l'une quelconque des revendications 1 à 7, caractérisé en ce que le bloc d'insertion (2) comprend des surfaces en oblique (44, 45) pour faciliter une introduction au moins approximativement centrée des éléments de retenue (17, 17', 18, 18') qui sont supportés par ces moyens de support.

9. Dispositif selon l'une quelconque des revendications 1 à 8, caractérisé en ce que le filetage de la vis (5) ou de la douille filetée (4) présente un pas supérieur à 1 mm par tour.

10. Dispositif selon l'une quelconque des revendications 1 à 9, caractérisé en ce que le tourillon (7) est guidé dans un alésage transversal (16) de la douille filetée (4) qui est élargi latéralement, et en ce qu'un alésage transversal (3) du bloc d'insertion (2) et la douille filetée (4) disposée dans cet alésage sont de constitution à concordance de formes de manière qu'un déplacement latéral de la douille filetée (4) le long de l'alésage transversal (3) du bloc d'insertion (2) soit possible.

Fig.1

EP 0 506 607 B1

# Fig. 2

# Fig. 3

Fig. 4

Fig. 5

Fig. 6

Fig. 7

Fig. 8

Fig. 9

Fig.10

Fig.13

Fig.11

Fig.12

Fig. 14

Fig. 15